# EUROPEAN PATENT APPLICATION

(11) **EP 2 509 323 A2**
(43) Date of publication of application: **10.10.2012**
(21) Application number: 11189772.4
(22) Date of filing: 18.11.2011
(51) Int. Cl.: H04N 13/00, H04N 13/04

(54) **Mobile terminal and image depth control method thereof**

(30) Priority: 08.04.2011 KR 20110032914
(71) Applicant: LG Electronics Inc., Seoul 150-721 (KR)
(72) Inventor: Kim, Jonghwan, Incheon (KR); T.S., Bipin, Karnataka (IN); C.P., Senthil, Karnataka (IN); Malipatil, Avinash, Karnataka (IN); O.T., Anumod, Karnataka (IN)
(74) Representative: Riemann, Jörg

(57) **Abstract**

An image depth control method is provided that include displaying a perceived 3-dimensional (3D) content on a display screen, recognizing a shape (or object) that faces the displayed 3D content, obtaining information about the recognized shape, determining a distance from the mobile terminal to the shape, and automatically changing a depth of the displayed 3D content based on the determined distance of the shape and the obtained information of the recognized shape.

## Description

### BACKGROUND

### 1. Field

Embodiments may relate to a mobile terminal and an image depth control method thereof capable of automatically controlling a depth of a perceived 3-dimensional (3D) stereoscopic image.

### 2. Background

A mobile terminal may perform various functions. Examples of the various functions may include a data and voice communication function, a photo or video capture function through a camera, a voice storage function, a music file reproduction function through a speaker system, an image or video display function, and/or the like. Mobile terminals may include an additional function capable of implementing games, and some mobile terminal may be implemented as a multimedia player. Recent mobile terminals may receive broadcast or multicast signals to allow the user to view video or television programs.

Efforts for supporting and enhancing functions of the mobile terminal may be performed. The efforts may include adding and improving software or hardware as well as changing and improving structural elements that form a mobile terminal.

Touch function of a mobile terminal may allow even users who are unskilled in a button/key input to conveniently perform the operation of a terminal using a touch screen. It has settled down as a key function of the terminal along with a user UI in addition to a simple input. Accordingly, as the touch function is applied to a mobile terminal in more various forms, development of a user interface (UI) suitable to that function may be further required.

Mobile terminals may display perceived 3-dimensional (3D) stereoscopic images, thereby allowing depth perception and stereovision exceeding a level of displaying two-dimensional images. Accordingly, the user may use more realistic user interfaces or contents through a 3-dimensional (3D) stereoscopic image.

However, when displaying the 3D image in a mobile terminal, if a size of the 3D image is suddenly changed to a great extent, then the depth of the image may be changed along therewith, thereby causing a feeling of fatigue to the user's eyes when this situation persists.

Moreover, when a 3D image is displayed by the user, a perceived depth of the image may be fixed to an average value. However, even at the same depth of the image, it may vary depending on a viewing distance, age (adult or child), sex (male or female), hours of the day or a surrounding environment of the relevant 3D image reproduction, thereby resulting in varying fatigue.

### BRIEF DESCRIPTION OF THE DRAWINGS

Arrangements and embodiments may be described in detail with reference to the following drawings in which like reference numerals refer to like elements and wherein:

FIG. 1 is a block diagram of a mobile terminal associated with an embodiment;

FIG. 2A is a front view of an example of the mobile terminal, and FIG. 2B is a rear view of the mobile terminal illustrated in FIG. 2A;

FIG. 3 is a block diagram of a wireless communication system in which a mobile terminal associated with an embodiment can be operated;

FIG. 4 is a view of a size change of a 3D image actually seen based on a viewing distance of the 3D image;

FIG. 5 is an example for adjusting a depth based on a distance;

FIG. 6 is a view of an example of a face recognition;

FIG. 7 is a view of an example for configuring a numerical depth or a hierarchical depth in an automatic depth control menu;

FIGs. 8A and 8B are views of an example for manually configuring a depth through an image bar;

FIGs. 9A and 9B are views of an example for compensating a depth based on a depth threshold and age;

FIGs. 10 A and 10B are views of an example for compensating a depth of a 3D image based on a size change of a display screen;

FIG. 11 is a flow chart of an example for compensating a depth of a 3D content based on a kind and reproduction time of the 3D content;

FIGs. 12A and 12B are views of an example for compensating a depth based on a kind of a 3D content;

FIG. 13 is a flow chart of a method of compensating a depth of a 3D content in a mobile terminal based on an embodiment; and

FIGs. 14A and 14B are views of an example for compensating a depth threshold of a 3D content based on a viewing distance.

### DETAILED DESCRIPTION

Embodiments may be described in detail with reference to the accompanying drawings, and the same or similar elements may be designated with the same numeral references regardless of the numerals in the drawings and their redundant description may be omitted. A suffix "module" or "unit" used for constituent elements disclosed in the following description may merely be intended for easy description of the specification, and the suffix itself may not give any special meaning or function. In describing embodiments, a detailed description may be omitted when a specific description for publicly known technologies to which embodiments pertain is judged to obscure the gist of the embodiment. The accompanying drawings are merely illustrated to easily explain embodiments disclosed herein, and therefore, they should not be construed to limit the technical spirit of the embodiments.

A terminal may include a portable phone, a smart phone, a laptop computer, a digital broadcast terminal, a personal digital assistant (PDA), a portable multimedia player (PMP), a navigator, and/or the like. It would be easily understood by those skilled in the art that a configuration disclosed herein may be applicable to stationary terminals such as a digital TV, a desktop computer, and/or the like, excluding constituent elements particularly configured only for a mobile terminal.

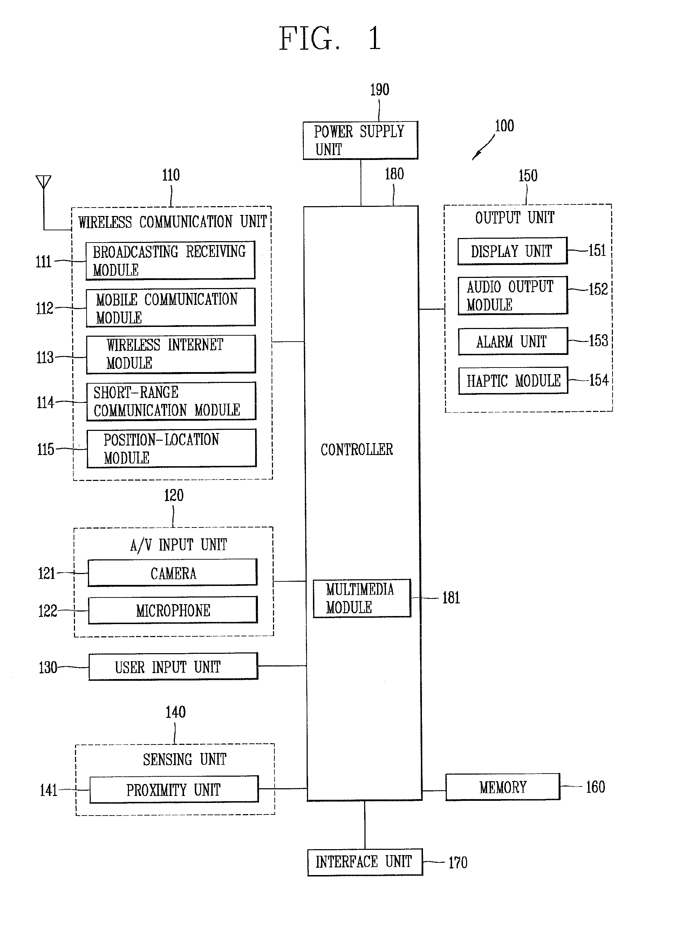

FIG. 1 is a block diagram of a mobile terminal 100 associated with an embodiment. Other embodiments and configurations may also be provided.

The mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and/or the like. However, the constituent elements (as shown in FIG. 1) are not necessarily required, and the mobile terminal may be implemented with greater or less number of elements than those illustrated elements.

The elements 110-190 of the mobile terminal 100 may now be described.

The wireless communication unit 110 may include one or more elements allowing radio communication between the mobile terminal 100 and a wireless communication system, or allowing radio communication between the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and/or the like.

The broadcast receiving module 111 may receive broadcast signals and/or broadcast associated information from an external broadcast management server through a broadcast channel. The broadcast associated information may be information regarding a broadcast channel, a broadcast program, a broadcast service provider, and/or the like. The broadcast associated information may also be provided through a mobile communication network, and in this example, the broadcast associated information may be received by the mobile communication module 112. The broadcast signal and/or broadcast-associated information received through the broadcast receiving module 111 may be stored in the memory 160.

The mobile communication module 112 may transmit and/or receive a radio signal to and/or from at least one of a base station, an external terminal and a server over a mobile communication network. The radio signal may include a voice call signal, a video call signal and/or various types of data according to text and/or multimedia message transmission and/or reception.

The wireless Internet module 113, as a module for supporting wireless Internet access, may be built-in or externally installed to the mobile terminal 100. The wireless Internet module 113 may use a wireless Internet technique including a WLAN (Wireless LAN), Wi-Fi, Wibro (Wireless Broadband), Wimax (World Interoperability for Microwave Access), HSDPA (High Speed Downlink Packet Access), and/or the like.

The short-range communication module 114 may be a module for supporting a short-range communication. The short-range communication module 114 may use short-range communication technology including Bluetooth, Radio Frequency IDentification (RFID), Infrared Data Association (IrDA), Ultra WideBand (UWB), ZigBee, and/or the like.

The location information module 115 may be a module for checking or acquiring a location (or position) of the mobile terminal, and the location information module 115 may be a GPS module as one example.

Referring to FIG. 1, the A/V (audio/video) input unit 120 may receive an audio or video signal, and the A/V (audio/video) input unit 120 may include a camera 121, a microphone 122, and/or the like. The camera 121 may process an image frame such as a still or moving image obtained by an image sensor in a video phone call or image capturing mode. The processed image frame may be displayed on a display 151.

The image frames processed by the camera 121 may be stored in the memory 160 or transmitted to an external device through the wireless communication unit 110. Two or more cameras 121 may be provided based on the use environment of the mobile terminal.

The microphone 122 may receive an external audio signal through a microphone in a phone call mode, a recording mode, a voice recognition mode, and/or the like, and may process the audio signal into electrical voice data. The processed voice data processed by the microphone 122 may be converted and outputted into a format that is transmittable to a mobile communication base station through the mobile communication module 112 in the phone call mode. The microphone 122 may implement various types of noise canceling algorithms to cancel noise (or reduce noise) generated in a procedure of receiving the external audio signal.

The user input unit 130 may generate input data to control an operation of the terminal. The user input unit 130 may include a key pad, a dome switch, a touch pad (pressure/capacitance), a jog wheel, a jog switch, and/or the like.

The sensing unit 140 may detect a current status of the mobile terminal 100 such as an opened or closed status of the mobile terminal 100, a location of the mobile terminal 100, an orientation of the mobile terminal 100, and/or the like, and the sensing unit 140 may generate a sensing signal for controlling operations of the mobile terminal 100. For example, when the mobile terminal 100 is a slide phone type, the sensing unit 140 may sense an opened or closed status of the slide phone. Further, the sensing unit 140 may take charge of a sensing function associated with whether or not power is supplied from the power supply unit 190, or whether or not an external device is coupled to the interface unit 170. The sensing unit 140 may also include a proximity sensor 141.

The output unit 150 may generate an output associated with a visual sense, an auditory sense, a tactile sense, and/or the like, and the output unit 150 may include the display 151, an audio output module 153, an alarm 153, a haptic module 155, and/or the like.

The display 151 may display (output) information processed in the mobile terminal 100. For example, when the mobile terminal 100 is in a phone call mode, the display 151 may display a User Interface (UI) or a Graphic User Interface (GUI) associated with a call. When the mobile terminal 100 is in a video call mode or an image capturing mode, the display 151 may display a captured image and/or a received image, a UI or GUI.

The display 151 may include at least one of a Liquid Crystal Display (LCD), a Thin Film Transistor-LCD (TFT-LCD), an Organic Light Emitting Diode (OLED) display, a flexible display, a 3-dimensional (3D) display, and/or an e-ink display.

Some displays (or display elements) may be a transparent or optical transparent type to allow viewing of an exterior through the display. It may be referred to as a transparent display. An example of the transparent display may include a transparent LCD (TOLED), and/or the like. Under this configuration, a user may view an object positioned at a rear side of a terminal body through a region occupied by the display 151 of the terminal body.

Two or more displays 151 may be implemented according to an implementation type of the mobile terminal 100. For example, a plurality of the displays 151 may be arranged on one surface to be separated from or integrated with each other, and/or may be arranged on different surfaces.

When the display 151 and a touch sensitive sensor (hereinafter referred to as a touch sensor) have a layered structure with each other, the structure may be referred to as a touch screen. The display 151 may be used as an input device rather than an output device. The touch sensor may be implemented as a touch film, a touch sheet, a touch pad, and/or the like.

The touch sensor may convert changes of a pressure applied to a specific portion of the display 151, or a capacitance generated at a specific portion of the display 151, into electric input signals. The touch sensor may sense not only a touched position and a touched area, but also a touch pressure.

When there is a touch input to the touch sensor, the corresponding signal(s) may be transmitted to a touch controller. The touch controller may process the received signals, and then transmit the corresponding data to the controller 180. Accordingly, the controller 180 may sense which region of the display 151 has been touched.

Referring to FIG. 1, a proximity sensor 141 may be provided at an inner region of the mobile terminal 100 covered by the touch screen, and/or adjacent to the touch screen. The proximity sensor may be a sensor for sensing presence or absence of an object approaching a surface to be sensed, and/or an object disposed adjacent to a surface to be sensed (hereinafter referred to as a sensing object), by using an electromagnetic field or infrared rays without a mechanical contact. The proximity sensor may have a longer lifespan and a more enhanced utility than a contact sensor.

The proximity sensor may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and/or so on. When the touch screen is implemented as a capacitance type, the proximity of a pointer to the touch screen may be sensed by changes of an electromagnetic field. In this example, the touch screen (touch sensor) may be categorized as a proximity sensor.

The display 151 may include a stereoscopic display unit for displaying a stereoscopic image.

A stereoscopic image may be a perceived 3-dimensional stereoscopic image, and the 3-dimensional stereoscopic image may be an image for allowing the user to feel a gradual depth and reality of an object located on the monitor or screen as in a real space. The 3-dimensional stereoscopic image may be implemented by using binocular disparity. Binocular disparity may denote a disparity made by location of two eyes separated by about 65 mm, allowing the user to feel the depth and reality of a stereoscopic image when two eyes see different two-dimensional images and then the images may be transferred through the retina and merged in the brain as a single image.

A stereoscopic method (glasses method), an auto-stereoscopic method (no-glasses method), a projection method (holographic method), and/or the like may be applicable to the stereoscopic display unit. The stereoscopic method used in a home television receiver and/or the like may include a Wheatstone stereoscopic method and/or the like.

Examples of the auto-stereoscopic method may include a parallel barrier method, a lenticular method, an integral imaging method, and/or the like. The projection method may include a reflective holographic method, a transmissive holographic method, and/or the like.

A perceived 3-dimensional stereoscopic image may include a left image (i.e., an image for the left eye) and a right image (i.e., an image for the right eye). The method of implementing a 3-dimensional stereoscopic image may be divided into a top-down method in which a left image and a right image are disposed at the top and bottom within a frame, a left-to-right (L-to-R) or side by side method in which a left image and a right image are disposed at the left and right within a frame, a checker board method in which pieces of a left image and a right image are disposed in a tile format, an interlaced method in which a left image and a right image are alternately disposed for each column and row unit, and a time sequential or frame by frame method in which a left image and a right image are alternately displayed for each time frame, according to the method of combining a left image and a right image into a 3-dimensional stereoscopic image.

For perceived 3-dimensional thumbnail images, a left image thumbnail and a right image thumbnail may be generated from the left image and the right image of the original image frame, and then combined with each other to generate a perceived 3-dimensional stereoscopic image. A thumbnail may denote a reduced image or a reduced still video. The left and right thumbnail image generated in this manner may be displayed with a left and right distance difference on the screen in a depth corresponding to the disparity of the left and right image, thereby implementing a stereoscopic space feeling.

A left image and a right image required to implement a 3-dimensional stereoscopic image may be displayed on the stereoscopic display unit by a stereoscopic processing unit. The stereoscopic processing unit may receive a 3D image to extract a left image and a right image from the 3D image, and/or may receive a 2D image to convert it into a left image and a right image.

When the stereoscopic display unit and a touch sensor are configured with an interlayer structure (hereinafter referred to as a stereoscopic touch screen) or the stereoscopic display unit and a 3D sensor for detecting a touch operation are combined with each other, the stereoscopic display unit may be used as a 3-dimensional input device.

As an example of the 3D sensor, the sensing unit 140 may include a proximity sensor 141, a stereoscopic touch sensing unit 142, a ultrasound sensing unit 143, and a camera sensing unit 144.

The proximity sensor 141 may measure a distance between the sensing object (for example, the user's finger or stylus pen) and a detection surface to which a touch is applied using an electromagnetic field or infrared rays without a mechanical contact. The mobile terminal may recognize which portion of a stereoscopic image has been touched by using the measured distance. More particularly, when the touch screen is implemented with a capacitance type, it may be configured such that the proximity level of a sensing object is sensed by changes of an electromagnetic field according to proximity of the sensing object to recognize or determine a 3-dimensional touch using the proximity level.

The stereoscopic touch sensing unit 142 may sense a strength, a frequency or a duration time of a touch applied to the touch screen. For example, the stereoscopic touch sensing unit 142 may sense a user applied touch pressure, and when the applied pressure is strong, then the stereoscopic touch sensing unit 142 may recognize the applied touch pressure as a touch for an object located farther from the touch screen.

The ultrasound sensing unit 143 may sense the location of the sensing object using ultrasound. For example, the ultrasound sensing unit 143 may be configured with an optical sensor and a plurality of ultrasound sensors.

The optical sensor may be sense light. For example, the optical sensor may be an infrared data association (IRDA) for sensing infrared rays.

The ultrasound sensor may sense ultrasound waves. A plurality of ultrasound sensors may be separated from one another, and through this configuration, the plurality of ultrasound sensors may have a time difference in sensing ultrasound waves generated from the same or adjoining point.

Ultrasound waves and light may be generated from a wave generating source. The wave generating source may be provided in the sensing object (for example, a stylus pen). Since light may be far faster than ultrasound waves, the time for light to reach the optical sensor may be far faster than the time for ultrasound waves to reach the optical sensor. Accordingly, the location of the wave generating source may be calculated by using a time difference between the light and ultrasound waves to reach the optical sensor.

The times for ultrasonic waves generated from the wave generating source to reach a plurality of ultrasonic sensors may be different. Accordingly, when moving the stylus pen, it may create a change in the reaching time differences. Using this, location information may be calculated according to a movement path of the stylus pen.

The camera sensing unit 144 may include at least one of a camera, a laser sensor, and/or a photo sensor.

For example, the camera and the laser sensor may be combined with each other to sense a touch of the sensing object to a 3-dimensional stereoscopic image. Distance information sensed by the laser sensor may be added to a two-dimensional image captured by the camera to acquire 3-dimensional information.

For example, a photo sensor may be provided on the display element. The photo sensor may be configured to scan a motion of the sensing object in proximity to the touch screen. More specifically, the photo sensor may be integrated with photo diodes (PDs) and transistors in the rows and columns thereof, and a content placed on the photo sensor may be scanned by using an electrical signal that changes according to the amount of light applied to the photo diode. In other words, the photo sensor may perform the coordinate calculation of the sensing object based on the changed amount of light, and the location coordinate of the sensing object may be detected through this.

The audio output module 153 may output audio data received from the wireless communication unit 110 or stored in the memory 160, in a call-receiving mode, a call-placing mode, a recording mode, a voice recognition mode, a broadcast reception mode, and/or so on. The audio output module 153 may output audio signals relating to functions performed in the mobile terminal 100 (e.g., a sound alarming a call received or a message received, and/or so on). The audio output module 153 may include a receiver, a speaker, a buzzer, and/or so on.

The alarm 154 may output signals notifying an occurrence of events from the mobile terminal 100. The events occurring from the mobile terminal 100 may include a call received, a message received, a key signal input, a touch input, and/or so on. The alarm 154 may output not only video or audio signals, but also other types of signals such as signals notifying occurrence of events in a vibration manner. Since the video or audio signals may be output through the display 151 or the audio output module 153, the display 151 and the audio output module 153 may be categorized into part of the alarm 154.

The haptic module 155 may generate various tactile effects that a user can feel. A representative example of the tactile effects generated by the haptic module 154 may include vibration. Vibration generated by the haptic module 154 may have a controllable intensity, a controllable pattern, and/or so on. For example, different vibrations may be output in a synthesized manner or in a sequential manner.

The haptic module 155 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and/or the like.

The haptic module 155 may be configured to transmit tactile effects through a user's direct contact, or a user's muscular sense using a finger or a hand. The haptic module 155 may be implemented as two or more in number according to configuration of the mobile terminal 100.

The memory 160 may store a program for processing and controlling the controller 180. Alternatively, the memory 160 may temporarily store input/output data (e.g., phonebook, messages, still images, videos, and/or the like). The memory 160 may store data related to various patterns of vibrations and sounds outputted upon the touch input on the touch screen.

The memory 160 may be implemented using any type of suitable storage medium including a flash memory type, a hard disk type, a multimedia card micro type, a memory card type (e.g., SD or DX memory), a Random Access Memory (RAM), a Static Random Access Memory (SRAM), a Read-Only Memory (ROM), an Electrically Erasable Programmable Read-only Memory (EEPROM), a Programmable Read-only Memory (PROM), a magnetic memory, a magnetic disk, an optical disk, and/or the like. The mobile terminal 100 may operate in association with a web storage that performs the storage function of the memory 160 on the Internet.

The interface unit 170 may interface the mobile terminal with external devices connected to the mobile terminal 100. The interface unit 170 may allow a data reception from an external device, a power delivery to each component in the mobile terminal 100, and/or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and/or the like.

The identification module may be configured as a chip for storing various information required to authenticate an authority to use the mobile terminal 100, which may include a User Identity Module (UIM), a Subscriber Identity Module (SIM), and/or the like. The device having the identification module (hereinafter referred to as an identification device) may be implemented as a type of smart card. The identification device may be coupled to the mobile terminal 100 via a port.

The interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 may control overall operations of the mobile terminal 100. For example, the controller 180 may perform the control and processing associated with telephony calls, data communications, video calls, and/or the like. The controller 180 may include a multimedia module 181 that provides multimedia playback. The multimedia module 181 may be configured as part of the controller 180 or as a separate component.

The controller 180 may perform a pattern recognition processing so as to recognize writing or drawing input carried out on the touch screen as text or image.

The power supply unit 190 may receive external and internal power to provide power for various components under the control of the controller 180.

Various embodiments as described herein may be implemented in a computer or similar device readable medium using software, hardware, and/or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units designed to perform the functions described herein. Such embodiments may be implemented in the controller 180 itself.

For software implementation, embodiments such as procedures or functions may be implemented together with separate software modules that allow performing of at least one function or operation. Software codes may be implemented by a software application written in any suitable programming language. The software codes may be stored in the memory 160 and executed by the controller 180.

The processing method of a user input to the mobile terminal 100 may be described.

The user input unit 130 may be manipulated to receive a command for controlling operation(s) of the mobile terminal 100, and may include a plurality of manipulation units. The manipulation units may be commonly designated as a manipulating portion, and any method may be employed if it is a tactile manner allowing the user to perform manipulation with a tactile feeling.

Various kinds of visual information may be displayed on the display 151. The visual information may be displayed in a form of characters, numerals, symbols, graphics, or icons, and/or may be implemented in 3-dimensional stereoscopic images.

For an input of the visual information, at least one of the characters, numerals, symbols, graphics, and/or icons may be displayed with a predetermined arrangement so as to be implemented in a form of keypad. Such a keypad may be referred to as a so-called "soft key."

The display 151 may operate on an entire region or operate by dividing into a plurality of regions. In case of the latter, the plurality of regions may be configured to operate in an associative way.

For example, an output window and an input window may be displayed on the upper portion and the lower portion of the display 151, respectively. The output window and the input window may be regions allocated to output or input information, respectively. A soft key on which numerals for inputting phone numbers or the like are displayed may be outputted on the input window. When the soft key is touched, numerals corresponding to the touched soft key may be displayed on the output window. When the manipulating unit is manipulated, a call connection for the phone number displayed on the output window may be attempted or a text displayed on the output window may be input to an application.

The display 151 or the touch pad may sense a touch input by scroll. The user may move an object displayed on the display 151, for example, a cursor or pointer provided on an icon, by scrolling the display 151 or the touch pad. Moreover, when a finger is moved on the display 151 or the touch pad, a path being moved by the finger may be visually displayed on the display 151. It may be useful to edit an image displayed on the display 151.

In order to cope with an example where the display 151 (touch screen) and the touch pad are touched together within a predetermined period of time, one function of the mobile terminal 100 may be executed. As an example of being touched together, there is an example when the user clamps a terminal body of the mobile terminal 100 using the thumb and forefinger. For one of the functions executed in the mobile terminal 100, there may be an activation or de-activation for the display 151 or the touch pad.

A mechanism for more precisely recognizing a touch input on a stereoscopic image in the mobile terminal 100 may be described in more detail.

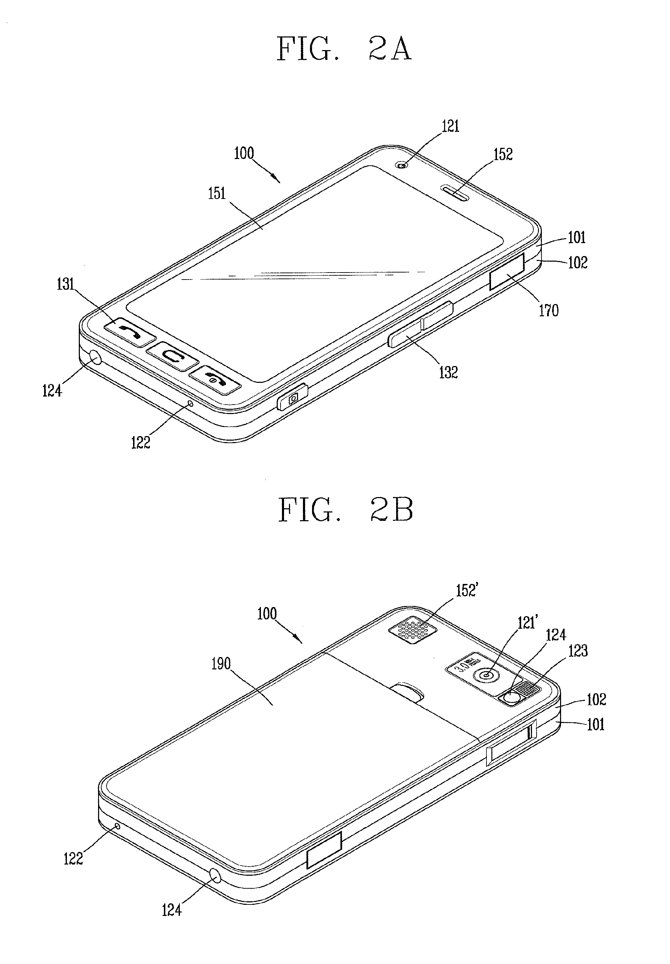

FIG. 2A is a front view of an example of a mobile terminal, and FIG. 2B is a rear view of the mobile terminal illustrated in FIG. 2A.

The mobile terminal 100 disclosed herein may be provided with a bar-type terminal body. However, embodiments are not only limited to this type of terminal, but are also applicable to various structures of terminals such as slide type, folder type, swivel type, swing type, and/or the like, in which two and more bodies are combined with each other in a relatively movable manner.

The body may include a case (casing, housing, cover, etc.) forming an appearance of the terminal. The case may be divided into a front case 101 and a rear case 102. Various electronic elements may be integrated into a space formed between the front case 101 and the rear case 102. At least one middle case may be additionally provided between the front case 101 and the rear case 102.

The cases may be formed by injection-molding a synthetic resin or may be also formed of a metal material such as stainless steel (STS), titanium (Ti), and/or the like.

A stereoscopic display unit, the sensing unit 140, the audio output module 153, the camera 121, the user input unit 130 (e.g., 131, 132), the microphone 122, the interface unit 170, and/or the like may be arranged on the terminal body, mainly on the front case 101.

The stereoscopic display unit may occupy a most portion of the front case 101. The audio output unit 153 and the camera 121 may be provided on a region adjacent to one of both ends of the stereoscopic display unit, and the user input unit 131 and the microphone 122 may be provided on a region adjacent to the other end thereof. The user interface 232 and the interface 170, and/or the like, may be provided on lateral surfaces of the front case 101 and the rear case 102.

The user input unit 130 may be manipulated to receive a command for controlling operation(s) of the mobile terminal 100, and may include a plurality of manipulation units 131, 132. The manipulation units 131, 132 may be commonly designated as a manipulating portion, and any method may be employed if it is a tactile manner allowing the user to perform manipulation with a tactile feeling.

The content inputted by the manipulation units 131, 132 may be configured in various ways. For example, the first manipulation unit 131 may be used to receive a command, such as start, end, scroll, and/or the like, and the second manipulation unit 132 may be used to receive a command, such as controlling a volume level being outputted from the audio output unit 153, and/or switching into a touch recognition mode of the stereoscopic display unit. The stereoscopic display unit may form a stereoscopic touch screen together with the sensing unit 140, and the stereoscopic touch screen may be an example of the user input unit 130.

The sensing unit 140, as a 3-dimensional sensor, may be configured to sensor a 3-dimensional location of the sensing object applying a touch. The sensing unit 140 may include the camera 121 and a laser sensor 144. The laser sensor 144 may be mounted on a terminal body to scan laser beams and detect reflected laser beams, and thereby sense a separation distance between the terminal body and the sensing object. However, embodiments are not limited to this, and may be implemented in the form of a proximity sensor, a stereoscopic touch sensing unit, an ultrasound sensing unit, and/or the like.

Referring to FIG. 2B, a camera 121' may be additionally mounted on a rear surface of the terminal body, namely, the rear case 102. The camera 121' may have an image capturing direction that is substantially opposite to the direction of the camera 121 (FIG. 2A), and may have different pixels from those of the camera 121.

For example, the camera 121 may have a relatively small number of pixels enough not to cause a difficulty when the user captures his or her own face and sends it to the other party during a video call or the like, and the camera 121' may have a relatively large number of pixels since the user often captures a general object that is not sent immediately. The cameras 121, 121' may be provided in the terminal body in a rotatable and popupable manner.

A flash 123 and a mirror 124 may be additionally provided adjacent to the camera 121'. The flash 123 may illuminate light toward an object when capturing the object with the camera 121'. The mirror 124 may allow the user to look at his or her own face, and/or the like, in a reflected way when capturing himself or herself (in a self-portrait mode) by using the camera 121'.

An audio output unit may be additionally provided on a rear surface of the terminal body. The audio output unit on a rear surface thereof together with the audio output unit 153 (FIG. 2A) on a front surface thereof may implement a stereo function, and it may be also used to implement a speaker phone mode during a phone call.

Further, the power supply unit 190 for supplying power to the mobile terminal 100 may be mounted on the terminal body. The power supply unit 190 may be configured so as to be incorporated into the terminal body, and/or directly detachable from the outside of the terminal body.

A Bluetooth antenna, a satellite signal receiving antenna, a data receiving antenna for wireless Internet, and/or the like may be provided on the terminal body in addition to an antenna for performing a phone call or the like. A mechanism for implementing the mobile terminal shown in FIG. 2 may be integrated into the terminal body.

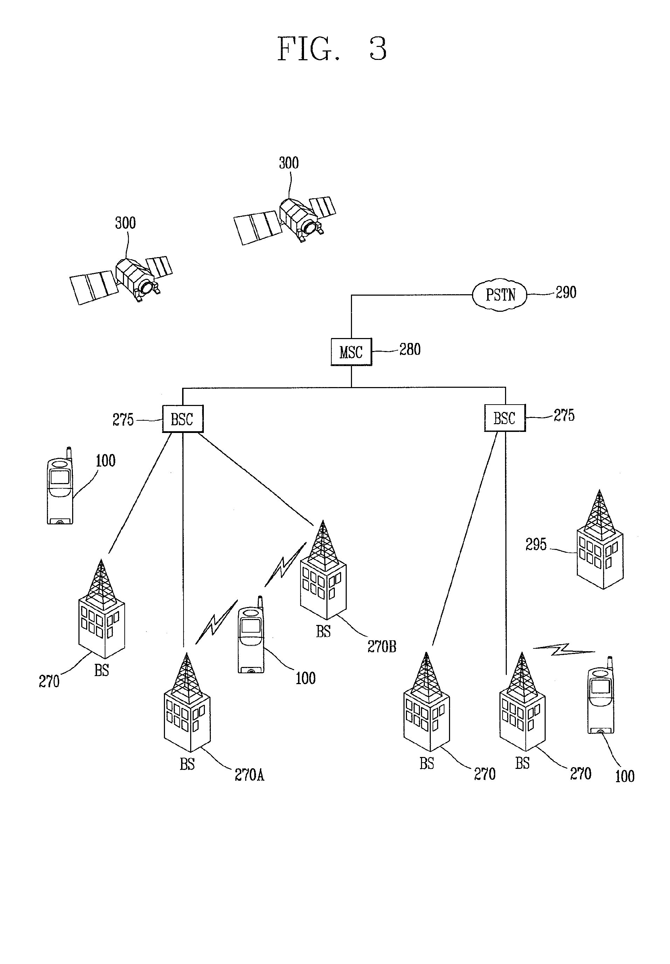

Hereinafter, referring to FIG. 3, a communication system may be described in which a terminal associated with an embodiment may operate.

The communication system may use different wireless interfaces and/or physical layers. For example, wireless interfaces that may be used by the communication system may include, frequency division multiple access (FDMA), time division multiple access (TDMA), code division multiple access (CDMA), universal mobile telecommunications system (UMTS) (particularly, long term evolution (LTE)), global system for mobile communications (GSM), and/or the like. Hereinafter, for ease of explanation, a description disclosed herein may be limited to CDMA. However, embodiments may be also applicable to all communication systems including a CDMA wireless communication system.

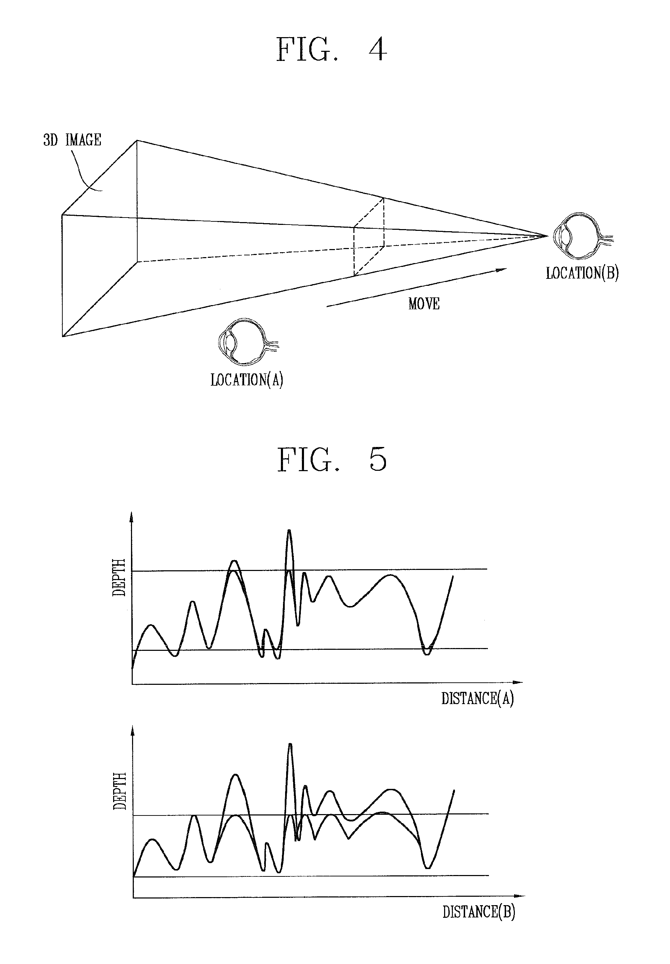

As shown in FIG. 3, a CDMA wireless communication system may include a plurality of terminals 100, a plurality of base stations (BSs) 270, a plurality of base station controllers (BSCs) 275, and a mobile switching center (MSC) 280. The MSC 280 may interface with a Public Switched Telephone Network (PSTN) 290, and the MSC 280 may also interface with the BSCs 275. The BSCs 275 may be connected to the BSs 270 via backhaul lines. The backhaul lines may be configured in accordance with at least any one of E1/T1, ATM, IP, PPP, Frame Relay, HDSL, ADSL, or xDSL, for example. The system shown in FIG. 4 may include a plurality of BSCs 275.

Each of the BSs 270 may include at least one sector, each sector having an omni-directional antenna or an antenna indicating a particular radial direction from the base station 270. Alternatively, each sector may include two or more antennas with various forms. Each of the BSs 270 may support a plurality of frequency assignments, each frequency assignment having a particular spectrum (for example, 1.25 MHz, 5 MHz).

The intersection of a sector and frequency assignment may be referred to as a CDMA channel. The BSs 270 may also be referred to as Base Station Transceiver Subsystems (BTSs). In this example, the term "base station" may refer collectively to a BSC 275, and at least one BS 270. The base stations may indicate cell sites. Alternatively, individual sectors for a specific BS 270 may also be referred to as a plurality of cell sites.

As shown in FIG. 3, the Broadcasting Transmitter (BT) 295 may transmit broadcasting signals to the mobile terminals 100 operate within the system. The broadcast receiving module 111 (FIG. 1) may be provided in the mobile terminal 100 to receive broadcast signals transmitted by the BT 295.

FIG. 3 additionally illustrates several global positioning system (GPS) satellites 300. Such satellites 300 may facilitate locating at least one of a plurality of mobile terminals 100. Though two satellites are shown in FIG. 3, location information (or position information) may be obtained with a greater or fewer number of satellites. The location information module 115 (FIG. 1) may cooperate with the satellites 300 to obtain desired location information. However, other types of position detection technology, all types of technologies capable of tracing the location may be used in addition to a GPS location technology. At least one of the GPS satellites 300 may alternatively or additionally provide satellite DMB transmissions.

During operation of a wireless communication system, the BS 270 may receive reverse-link signals from various mobile terminals 100. At this time, the mobile terminals 100 may perform calls, message transmissions and receptions, and other communication operations. Each reverse-link signal received by a specific base station 270 may be processed within that specific base station 270. The processed resultant data may be transmitted to an associated BSC 275. The BSC 275 may provide call resource allocation and mobility management functions including systemization of soft handoffs between the base stations 270. The BSCs 275 may also transmit the received data to the MSC 280, which provides additional transmission services for interfacing with the PSTN 290. The PSTN 290 may interface with the MSC 280, and the MSC 280 may interface with the BSCs 275. The BSCs 275 may also control the BSs 270 to transmit forward-link signals to the mobile terminals 100.

### Perceived 3-Dimensional (3D) Stereoscopic Image

A perceived 3-dimensional stereoscopic image (hereinafter referred to as a 3D image) may be an image for allowing the user to feel depth and reality of an object located on the monitor or screen similarly as in the real space. The perceived 3-dimensional stereoscopic image may be implemented by using binocular disparity. Binocular disparity may denote a disparity made by two eyes separated apart from each other. Accordingly, the user may feel depth and reality of a perceived stereoscopic image when two eyes see different two-dimensional images and then the images may be transferred through the retina and merged in the brain as a single image.

The perceived 3D image may be displayed by a display method such as a stereoscopic method (glasses method), an auto-stereoscopic method (no-glasses method), a projection method (holographic method), and/or the like. The stereoscopic method may be used in a home television receiver or the like and may include a Wheatstone stereoscopic method and/or the like. Examples of the auto-stereoscopic method may include a parallex barrier method and a lenticular method. Additionally, the projection method may include a reflective holographic method, a transmissive holographic method, and/or the like.

### Generation and Display of a Perceived 3D Image

A 3D image may include a left image (image for the left eye) and a right image (image for the right eye). The method of implementing a perceived 3-dimensional stereoscopic image may be divided into a top-down method in which a left image and a right image are provided at the top and bottom within a frame, a left-to-right (L-to-R) or side-by-side method in which a left image and a right image are provided at the left and right within a frame, a checker board method in which pieces of a left image and a right image are provided in a tile format, an interlaced method in which a left and a right image are alternately provided for each column and row unit, and a time-sequential or frame-by-frame method in which a left image and a right image are alternately displayed for each time frame, according to the method of combining a left image and a right image into a perceived 3-dimensional stereoscopic image.

### Depth of 3D image

A depth (or depth value) in a perceived 3D image may denote an index indicating a 3-dimensional distance difference between objects within an image. The depth may be defined as 256 levels (maximum value 255 - minimum value 0) that indicates a place close to the viewer (or a user). Accordingly, adjusting the depth in a perceived 3D image may represent that the perceived 3D image is expressed as an original depth when it is displayed with an original size, and is adjusted to a lower depth than the original one when the perceived 3D content is displayed with a smaller image.

For example, when the depth is defined to have 256 levels with a maximum value 255 and a minimum value 0, the depth may be adjusted to 255 when the perceived 3D image is displayed with an original size, and the depth may be adjusted to a value less than 255 when the perceived 3D image is displayed with a smaller image.

Further, adjusting the depth in a perceived 3D image when displayed with a same image may represent that the depth is adjusted to have a lower value when the distance between the mobile terminal and the viewer is nearer and the depth adjusted to have a higher value when the distance is further away. This is because the perceived 3D image is viewed with a large size when the distance between the mobile terminal and the viewer is nearer.

A perceived 3-dimensional (3D) image is a stereoscopic image, thereby allowing the user to feel different levels of fatigue based on a viewing distance (between the mobile terminal and the viewer) and a surrounding environment.

Embodiments may provide a method of automatically controlling (compensating) a depth of a perceived 3-dimensional (3D) image to reduce the user's 3D fatigue.

A viewing distance, a recognition result of the shape (or object) (user, sex, race, age, distance between two eyes), a screen size, a content attribute (content type, reproduction time), a reproduction pattern (reproduction time or time zone) and/or a surrounding environment (lighting and location) may be used as information for controlling the depth of a perceived 3D image.

A distance between the mobile terminal and a shape (user's face) may be measured by using an ultrasound sensor and an infrared sensor. The distance between the mobile terminal and a face shape may be measured or determined based on a time at which waves emitted from a light-emitting unit of the ultrasound sensor may be reflected by the user's face (shape), and the distance between the mobile terminal and a face shape may be measured or determined by measuring an amount or angle at which light emitted from a light-emitting unit of the infrared sensor is reflected and returned.

The user's face viewing a 3D image may be recognized or determined by using any one of various publicly-known face recognition technologies. The user's face intending to view or viewing a perceived 3D image using a built-in camera of the mobile terminal may be recognized (specific user), and preset user information (age, sex, and priority) based on the recognized user may be used to control the depth of a perceived 3D image. Embodiments may recognize or determine a shape that faces displayed 3D content on a display screen.

Device information may be determined through the type of the mobile terminal, or may be determined based on the user's configuration information and viewing type (horizontal view and vertical view), and content information may determine the kind (education broadcast, animation, action movie and others) and type (information or a portion including a high depth) of the relevant content from the storage information of the content (3D image). Further, a depth distribution may be provided in advance from a 3D image.

For the surrounding environment of the terminal, an amount of light may be measured by an illumination sensor to determine day or night, and the user's location or place may be sensed by using a GPS sensor.

FIG. 4 is a view of a size change of a 3D image based on a viewing distance.

As shown in FIG. 4, while the user views a perceived 3D image (3D content), the user may feel that a size of the 3D image is reduced when the user' eyes are drawn further away from the screen (or the mobile terminal). For example, the perceived 3D image may be seen in a large size when it is viewed at the location "A" and may be seen in a small size when the user moves to view it at the location "B".

When the user views a perceived 3D image (in which the movement is generated in a stereoscopic manner) set to a predetermined depth, the user may feel different levels of fatigue based on a viewing distance even at the same depth.

As a result, a distance between the mobile terminal and a shape (a distance or distance to the user's face) may be measured using an ultrasound sensor and an infrared sensor, and then a depth threshold of the 3D image may be automatically changed based on the measured distance. The distance may be measured based on a change of the shape (face) when using a camera. As used herein, the depth threshold may be a maximum depth limit and/or a minimum depth limit.

A shape (user's face) intending to view or viewing a perceived 3D image may be recognized or determined by using a camera, and a depth of the perceived 3D image may be precisely compensated for preset shape information (for example, whether or not it is a human being, a specific user, age, sex and priority in case of a human being) based on the recognized shape and an analysis result of the relevant shape.

The information used to precisely control a depth may include a viewing time (or time zone), device information (screen size), content information (reproduction time, content kind and type), user information (number of persons, age, sex and priority), and/or a surrounding environment (lighting and location).

The foregoing various items for adjusting the depth of a perceived 3D image may be configured through a 3D control menu, thereby allowing the user to selectively adjust the depth for the user's desired item.

FIG. 5 is an example for adjusting a depth based on a distance. Other embodiments and configurations may also be provided.

Adjusting the depth may represent adjusting a maximum depth limit and a minimum depth limit (or threshold) of the depth. The depth threshold may include a positive depth threshold and a negative depth threshold based on zero.

The controller 180 may automatically change a maximum depth limit and a minimum depth limit (or threshold) of the perceived 3D image based on the measured distance between the mobile terminal and the face (location "A" or "B").

The controller 180 may recognize or determine the user's face intending to view or viewing a 3D image using a camera to automatically compensate a stereoscopic level in real time within the set stereoscopic maximum depth limit and/or minimum depth limit (or threshold). In particular, when a plurality of faces are detected as a result of the face recognition, a maximum or minimum depth limit of the depth may be changed based on the nearest user.

When the moving distance exceeds a preset distance to pass through a maximum or minimum depth limit of the depth, the controller may notify it to the user, thereby allowing the user to select whether or not the maximum or minimum depth limit is to be compensated.

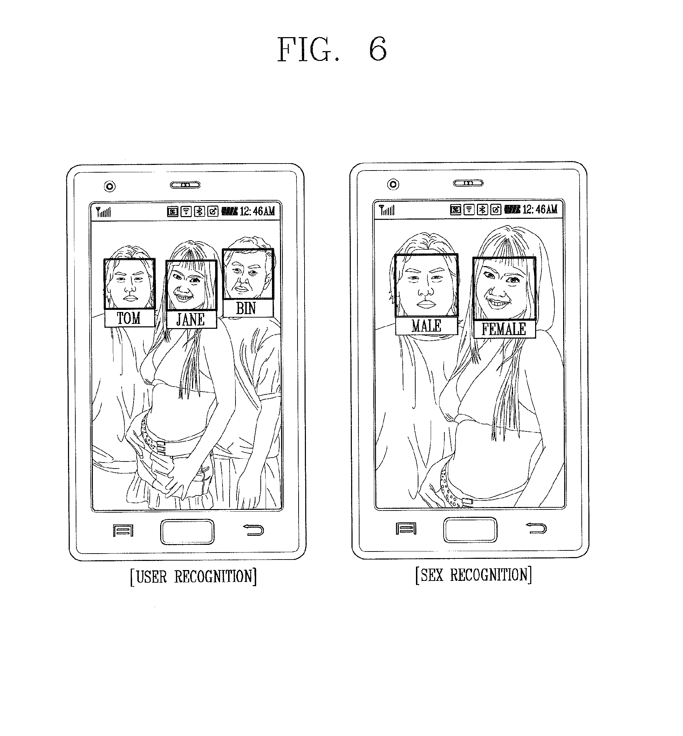

FIG. 6 is a view of an example of a face recognition.

Face recognition is a technology for detecting a face portion from a preview image or a captured image of the camera, and includes a technology for recognizing even further information associated with the relevant user based on the recognized face.

Through the face recognition technology, a user's name, sex, age, and 3D viewing information (including history) set to the relevant user may be determined. If information associated with the recognized face is not stored therein, then it may be possible to determine the user's sex and age based on a size and/or an outline of the face.

Accordingly, a varying stereoscopic level may be automatically compensated by changing a maximum or minimum depth limit (or threshold) of the depth based on a result of the face recognition in addition to the distance. At this time, the maximum or minimum depth limit of the depth according to user, sex, age (adult or baby) may have been stored in advance. The stored maximum or minimum depth limit information may be provided as a default or selected by the user in an automatic depth control menu, and/or configured by directly moving an image bar.

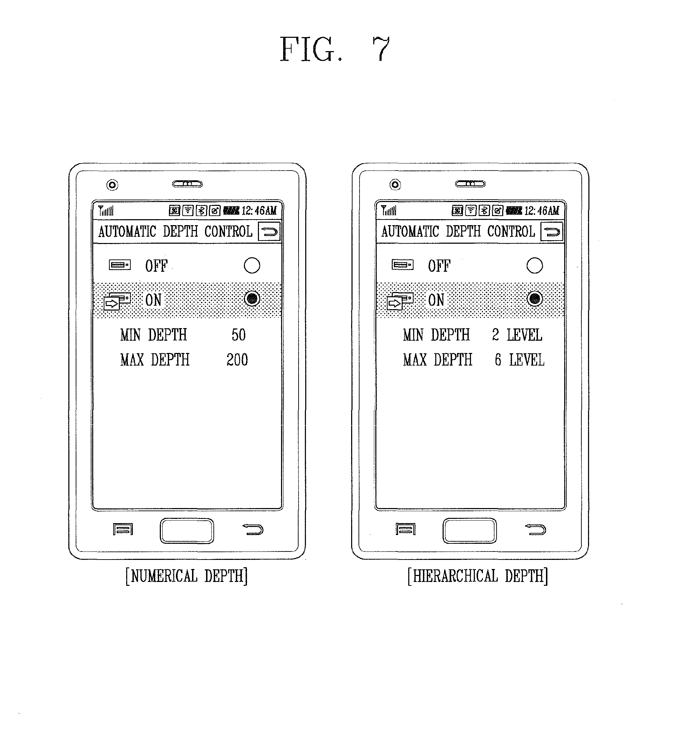

FIG. 7 is a view of an example for configuring a numerical depth (0-255) or a hierarchical depth (1-7 levels) when the automatic depth control menu is set to "on".

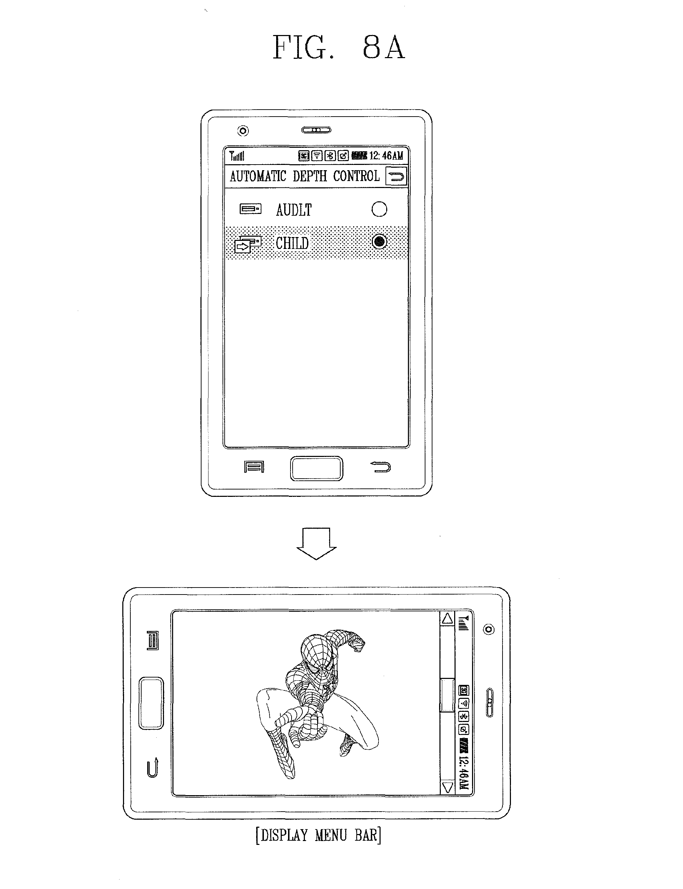

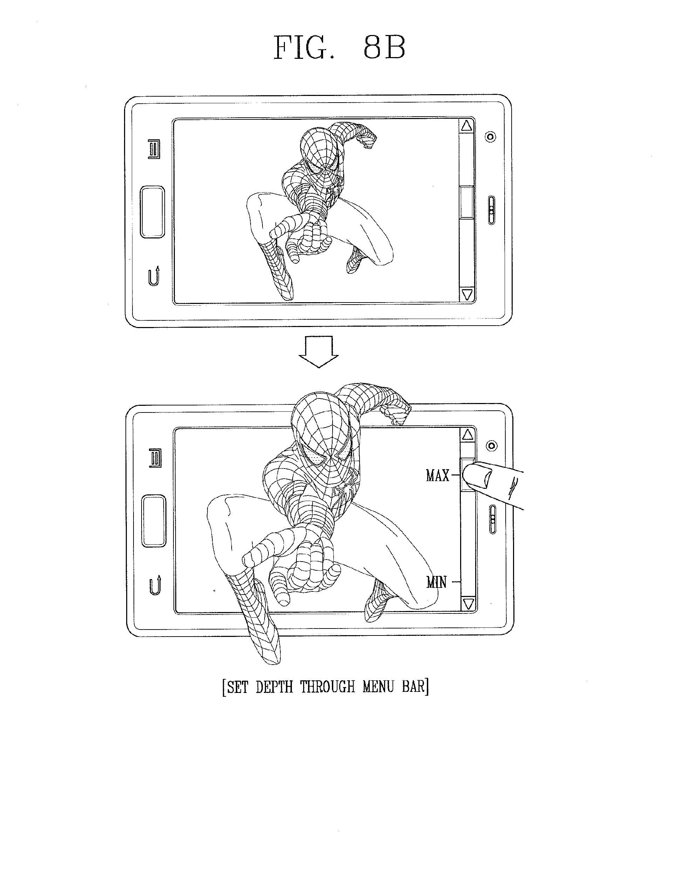

FIGs. 8A and 8B are views of an example for manually configuring the depth through an image bar.

As shown in FIG. 8A, if the user selects a predetermined mode, for example, "child or adult mode," from a plurality of modes included in the automatic depth control menu, then an image bar may be displayed together with a perceived 3D image for test or being reproduced. The automatic control menu may include various modes associated with age, sex, and/or time.

The user may directly manipulate an image bar to configure a maximum positive depth limit (maximum depth) and a maximum negative depth limit (minimum depth) as shown in FIG. 8B. The configured depth (or depth threshold) may be stored in the memory 160.

Accordingly, the controller 180 may recognize or determine the user's face intending to view the relevant 3D image through a camera during, prior to or subsequent to 3D image reproduction and automatically compensate the depth of the perceived 3D image based on the recognition result. In other words, the controller 180 may automatically compensate a prestored depth limit according to user, sex, and/or age (adult or baby).

If at least one or more adjustment items (user, sex, age, race, shape, number of users, etc.) are detected, then the controller 180 may compensate a depth limit based on the priority.

The controller 180 may preferentially compensate the face shape when a plurality of shapes are detected, preferentially compensate the registered user's face when a plurality of faces are recognized, and/or preferentially compensate the user's face with a low depth limit (i.e., closely located user's depth limit).

Even when a plurality of registered user's faces are detected, the controller 180 may preferentially compensate the depth limit when a baby face (shape) is detected.

Reference depth limits (or thresholds) may be configured for each age, race, and sex, and thus the depth limits may be compensated based on the relevant setup values, and depth limits may be compensated based on a distance value between two eyes. It is because a distance between two eyes may be different even in case of adults, and the stereoscopic feeling of the 3D image may be different based on the distance difference between two eyes. Accordingly, the reference value may be configured in a different manner based on the distance value between two eyes and used when compensating the depth limit.

Embodiments may not be limited to this, and the depth of a perceived 3D image may be adjusted by grasping the user's feeling through face recognition. As an example, the depth may be adjusted such that the depth is increased when he or she feels good and decreased when he or she feels bad, thereby adaptably compensating the depth of the perceived 3D image based on the user's condition.

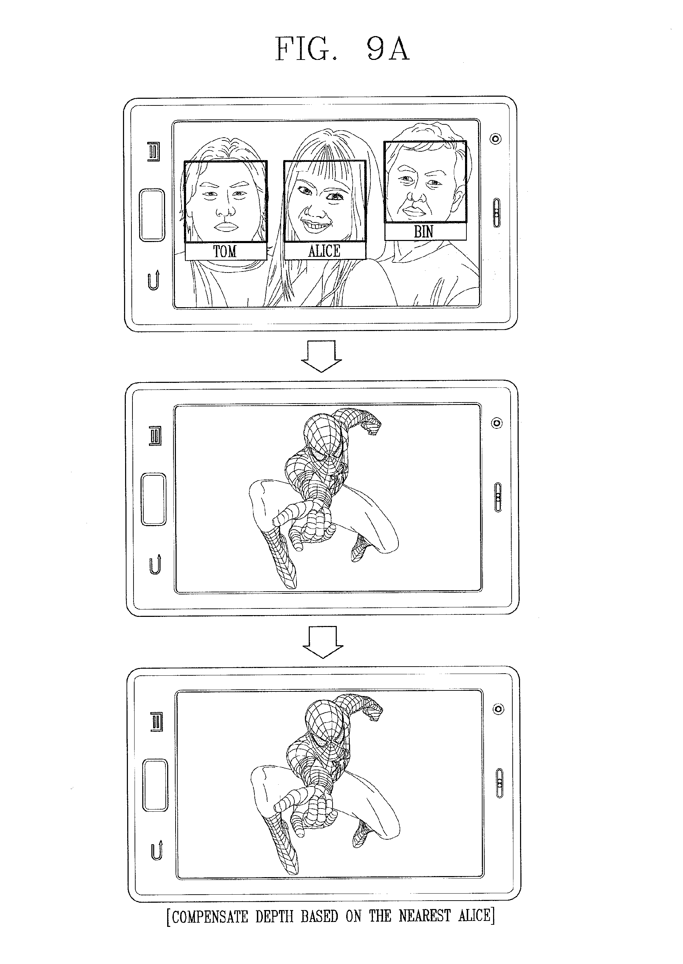

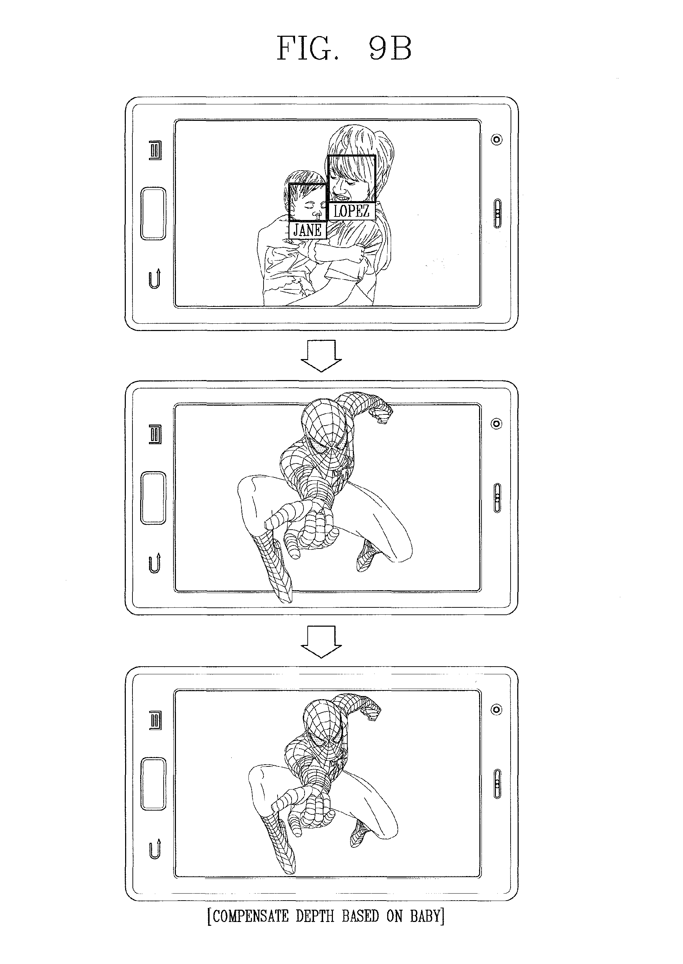

FIGs. 9A and 9B are views of an example for compensating the depth based on a depth limit and age. As shown in FIG. 9A, when three persons (Tom, Alice and Bin) are recognized or determined as a result of shape recognition, the controller may retrieve information on the three persons based on information previously stored in the memory 160. The controller 180 may adjust the depth based on Alice who has a lowest depth limit (i.e., the nearest person) from among the three persons.

If registered two persons (i.e., Jane and Lopez) are recognized or determined as a result of shape recognition, then the controller 180 may compensate the depth (configured to have a low depth) based on Jane who is a baby. Further, if a plurality of shapes (faces or shapes) are recognized or determined, then the controller 180 may configure a depth reference value that is different from other faces on a specific face or object, thereby controlling the depth in a separate manner.

As a result, the depth of a perceived 3D image may be effectively adjusted based on a 3D image viewing distance, various ages, races, and sexes using a mobile terminal, thereby effectively reducing the feeling of 3D fatigue.

As described above, the depth of a perceived 3D image (content) may vary based on the size of an object seen in the 3D image. The depth may be increased as increasing the size of the object. The size of the object may be determined by a size of the object itself, but may vary based on a size of the display screen displaying the relevant object. The size of the display screen may vary based on the kind of a mobile terminal and the user's setup. Even when the user configures a screen size, the screen may vary based on a viewing conversion (converting from vertical to horizontal view).

As a result, even when a size of the display screen varies while viewing a 3D image, the user may feel 3D fatigue.

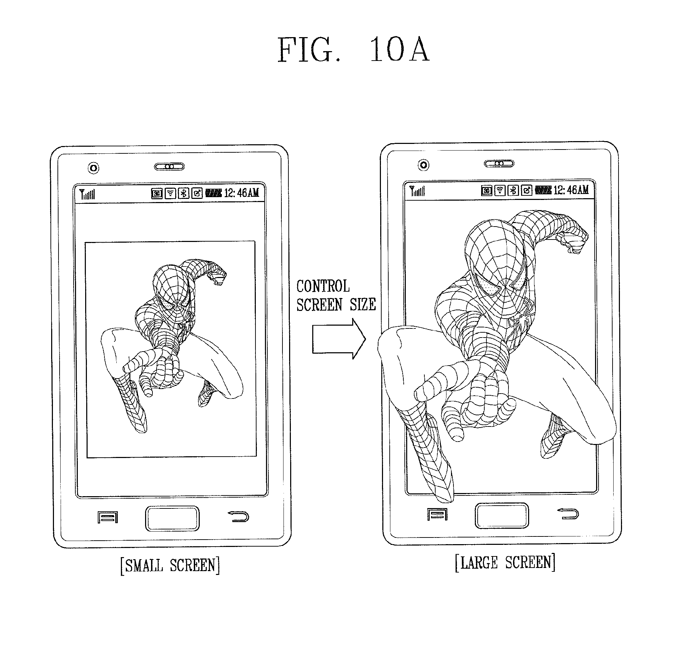

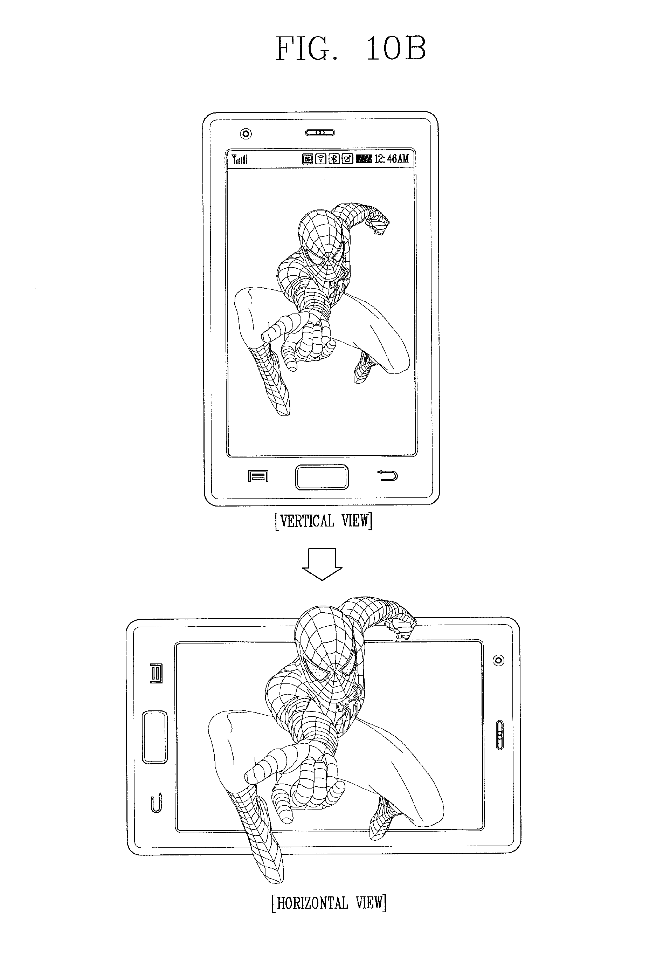

FIGs. 10 A and 10B are views of an example for compensating the depth of a perceived 3D image based on a size change of the display screen.

The controller 180 may increase the depth of a perceived 3D image when changing a small screen to a large one as shown in FIG. 10A, and may increase the depth of a 3D image even when converting a vertical view to a horizontal view as shown in FIG. 10B. In the opposite case, the controller 180 may decrease the depth of a perceived 3D image, respectively. Even in this example, a reference value of the depth may be configured for a specific object or face of interest to have a different depth from other objects or faces.

The depth of a perceived 3D image may be configured or compensated based on various needs between the mobile terminal and the user viewing a 3D content. The depth of a perceived 3D image may be compensated according to the perceived 3D content attribute, surrounding environment, and/or user's viewing pattern. The controller 180 may adaptably compensate the depth of a perceived 3D image based on the 3D content attribute (i.e., reproduction time, kind of a content), the surrounding environment (location, day and night), and/or the user's viewing pattern (actual viewing time and viewing time zone).

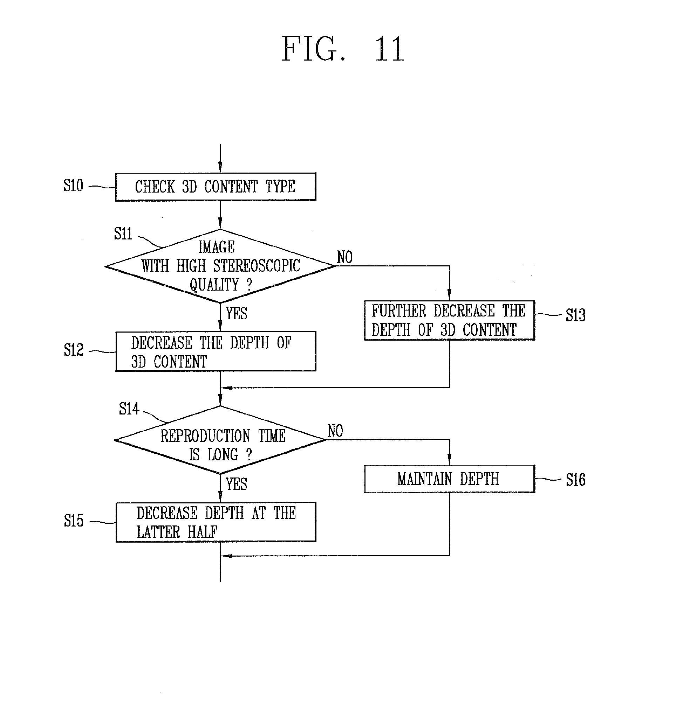

FIG. 11 is a flow chart of an example for compensating a depth of a perceived 3D content based on a kind and a reproduction time of the 3D content.

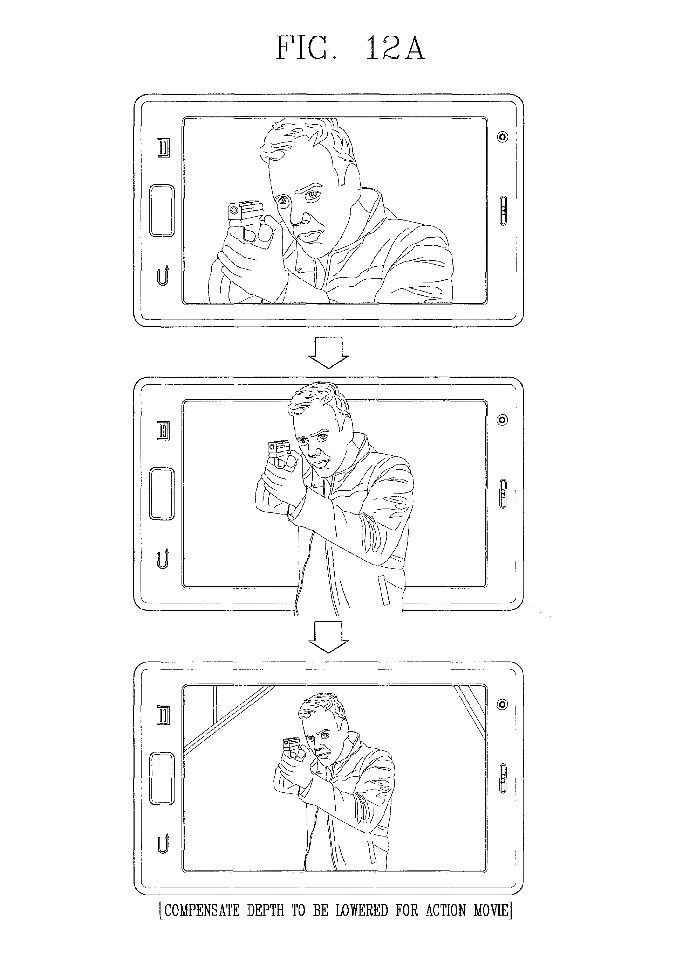

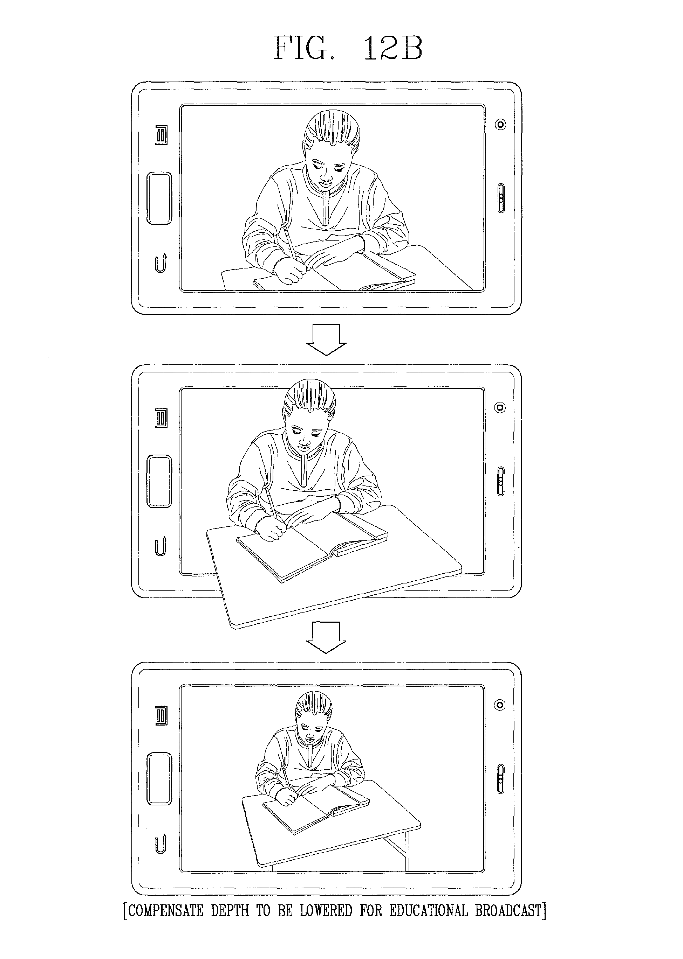

As shown in FIG. 11, the controller 180 may check (or determine) a 3D content attribute (kind of a content and reproduction time) (S10, S11). As a result of the check, the controller 180 may decrease a depth limit (or threshold) to reduce eyes fatigue when the 3D content is an image with high stereoscopic quality such as an action movie as shown in FIG. 12A (S12), and may further decrease the depth limit when it is an image requiring no stereoscopic quality such as an educational broadcast as shown in FIG. 12B (S13).

If depth adjustment for a 3D content attribute has been completed once, then the controller 180 may check (or determine) a reproduction time of the relevant content (S14). As a result of the check, the controller 180 may gradually decrease the depth limit as entering the latter half when the reproduction time is long (S15), and may maintain a preset depth limit when the reproduction time is short (S16).

The controller 180 may compensate the depth limit to be lowered when the environment is dark depending on the surrounding environment measured by using an illumination sensor, and may compensate the depth limit to be raised when the environment is light. The controller 180 may configure a specific depth limit for a specific location by grasping the user's location through GPS, and may compensate the depth limit to be raised during the daytime and to be lowered during the night time depending on the user's actual viewing time and viewing time zone.

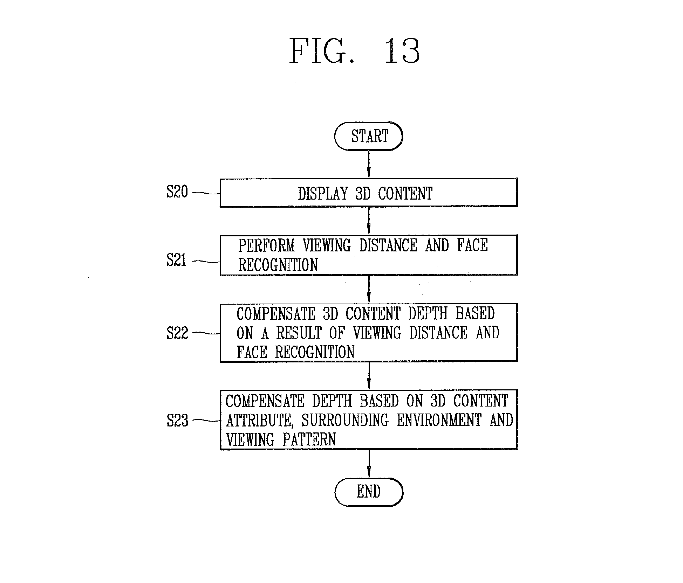

FIG. 13 is a flow chart of a method of compensating a depth of a perceived 3D content in a mobile terminal according to an embodiment.

As shown in FIG. 13, the controller 180 may display the user's selected 3D content on the display 151 (S20).

If the 3D content is displayed, then the controller 180 may measure a viewing distance to the user intending to view through an infrared sensor, an ultrasound sensor and/or a laser sensor, and may perform face recognition using a camera (S21). In this example, the viewing distance may be measured by using the change of a face size through a camera.

As a result, the controller 180 may apply a preset depth limit (or threshold) based on a result of the measured viewing distance and face recognition, thereby adjusting a depth limit of the 3D content.

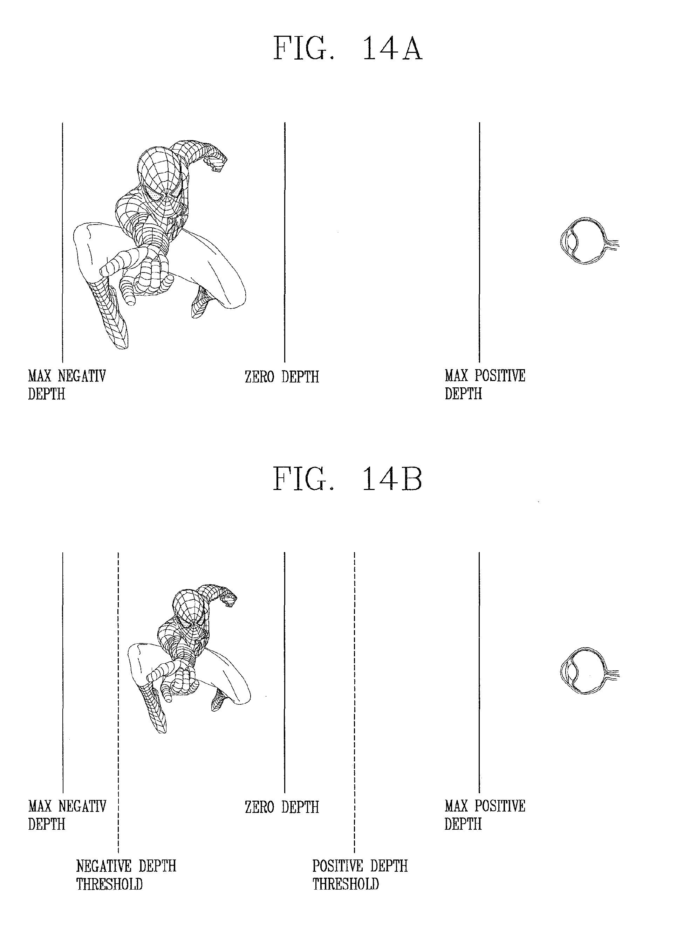

In this example, as shown in FIGs. 14A and 14B, a depth limit (or threshold) may be configured based on the viewing distance and then the configured depth limit may be compensated based on a result of the face recognition. In other words, if the viewing distance is drawn nearer, then the controller 180 may configure the depth limit of a 3D content displayed in FIG. 14A to be lowered (negative depth limit, positive depth limit) as shown in FIG. 14B. On the contrary, the controller 180 may configure the depth limit based on a result of face recognition and then compensated based on a viewing distance.

Subsequently, the controller 180 may check or determine a 3D content attribute, a surrounding environment and a viewing pattern, and may further compensate the depth limit of the compensated 3D content.

As described above, the depth of a perceived 3D image may be automatically controlled (compensated) based on a viewing distance, a result of face recognition (user, sex, race, age, distance between two eyes), a screen size, a content attribute (content type, reproduction time), a reproduction pattern (reproduction time or time zone) and/or a surrounding environment (lighting and location), thereby effectively reducing the user's 3D fatigue.

Further, for ease of explanation, a perceived 3D image and a perceived 3D depth limit have been described as an example, but the 3D image and depth limit may be used to have a same meaning as a 3D content and 3D depth, respectively. For ease of explanation, an example of adjusting the depth of a 3D content according to a viewing distance has been described, but the depth of the 3D content may be sequentially or simultaneously adjusted by at least one of a viewing distance, a time (or time zone), device information (screen size), content attribute (reproduction time, content kind and type), user information (number of persons, age, sex and viewing time), and/or surrounding environment, and the application thereof may be determined based on the setup in the automatic depth control menu.

In at least one embodiment, the controller 180 may turn on the relevant sensor (to determine the distance) only when a lengthy video, image and/or music is to be played. This may help conserve energy from the battery.

The foregoing method may be implemented as codes readable by a computer on a medium written by the program. Examples of the computer-readable media may include ROM, RAM, CD-ROM, magnetic tape, floppy disk, and optical data storage device, and/or the like, and may also include a device implemented in the form of a carrier wave (for example, transmission via the Internet).

Configurations and methods according to the above-described embodiments may not be applicable in a limited way to the foregoing terminal, and all or part of each embodiment may be selectively combined and configured to make various modifications thereto. Accordingly, the configuration shown in the embodiments disclosed herein and the drawings may be merely a preferred embodiment, and is not intended to represent all the technical spirit of embodiments, and thereby it should be appreciated that there may exist various equivalents and modifications for substituting those at the time of filing this application.

Accordingly, embodiments may provide a mobile terminal and an image depth control method thereof capable of controlling the depth of a perceived 3D content (image), thereby reducing the user's feeling of fatigue.

A mobile terminal and an image depth control method thereof may be capable of automatically controlling the depth of a perceived 3D content (image) based on a viewing environment of the 3D content.

In order to accomplish the foregoing tasks, an image depth control method of a mobile terminal according to an embodiment may include displaying a perceived 3-dimensional (3D) stereoscopic content, recognizing a shape located at a front side of the viewing angle of the 3D content, and automatically controlling the depth of the 3D content based on a distance of the recognized shape and an analysis result of the relevant shape.

The distance of the shape may be measured by an ultrasound sensor, an infrared sensor or a laser sensor, and may be measured prior to or subsequent to displaying the perceived 3-dimensional (3D) stereoscopic content.

The depth may be automatically increased or decreased as a distance to the shape is drawn far or near.

The depth of the 3D content may be controlled based on the nearest shape when a plurality of the recognized shapes exists. In particular, the depth of the 3D content may be controlled based on a youngest user when the recognized shape is a face.

The analysis result may include a user, sex, age, race, feeling, and/or a distance between two eyes.

The method may further include precisely compensating the depth of the perceived 3D content based on at least one of an attribute of the 3D content, a size of the displayed screen, and/or a surrounding environment.

The depth limit (maximum) may be gradually reduced as a reproduction time has passed when the reproduction time of the 3D content is long.

A perceived 3D content requiring a lot of 3-dimensional effect may reduce the depth limit, and a perceived 3D content requiring a lack of 3-dimensional effect may further reduce the depth limit. Further, the surrounding environment may include day or night, lighting, and location, and the depth limit may be adjusted to be lowered when the lighting is dark or during night time.

A mobile terminal according to an embodiment may include a stereoscopic display unit configured to display a perceived 3-dimensional (3D) stereoscopic content, a sensing unit configured to recognize or determine a shape located at a front side of the viewing angle of the 3D content, and a controller configured to automatically compensate the depth of the 3D content according to a distance of the recognized shape and a result of the shape analysis.

The sensing unit may include a camera, an infrared sensor, an ultrasonic sensor, and/or a laser sensor.

The controller may measure a viewing distance between a terminal body and a shape based on an output of the ultrasonic sensor, the infrared sensor, and/or the laser sensor.

The controller may increase or decrease the depth as a distance to the shape is drawn far or near, and may adjust the depth of the 3D content based on the nearest shape when a plurality of shapes are recognized or determined. The controller may preferentially control the depth of the 3D content based on a baby when a baby's face is included in the recognized shapes.

The controller may additionally compensate the depth of the 3D content based on a user, sex, age, race, feeling, and/or a distance between two eyes.

The controller may precisely compensate the depth of the 3D content based on at least one of an attribute of the 3D content, a size of the displayed screen, and/or a surrounding environment.

The controller may gradually reduce the depth limit as reproduction time has passed when the reproduction time of the 3D content is long, and may reduce the depth limit for a 3D content requiring a lot of 3-dimensional effect, and may further reduce the depth limit for a 3D content requiring a lack of 3-dimensional effect.

The surrounding environment may include day or night, lighting, and location, and the controller may adjust the depth limit to be lowered when the lighting is dark or during night time.

The mobile terminal may further include a memory configured to store the depth of the 3D content according to a distance of the shape registered by the user and a result of the shape recognition. The depth of the 3D content may be provided as a default or configured by the user through an automatic depth control menu.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An image depth control method in a mobile terminal (100), the method comprising:
displaying (S20) a perceived 3-dimensional (3D) content on a display screen;
recognizing (S21) a shape that faces the displayed 3D content, and obtaining information about the recognized shape;
determining (S22) a distance from the mobile terminal to the shape; and
automatically (S23) changing a depth of the displayed 3D content based on the determined distance from the mobile terminal to the shape and the obtained information about the recognized shape.

2. The method of claim 1, wherein the shape comprises a face shape or a 3D object shape.

3. The method of claim 1 or 2, wherein determining the distance includes measuring the distance from the display screen to the face shape using an ultrasound sensor, an infrared sensor or a laser sensor.

4. The method as claimed in any one of the preceding claims, wherein automatically changing the depth includes automatically increasing the depth as a distance to the shape increases or automatically decreasing the depth as a distance to the shape decreases.

5. The method as claimed in one of the claims 1-3, wherein automatically changing the depth includes controlling the depth of the displayed 3D content based on a nearest face shape when a plurality of recognized face shapes face the displayed 3D content.

6. The method as claimed in any one of the preceding claims, wherein controlling the depth of the displayed 3D content is based on a specific user, sex, age, race, feeling, or a distance between two eyes.

7. The method as claimed in any one of the preceding claims, wherein automatically changing the depth includes changing the depth of the displayed 3D content further based on at least one of an attribute of the 3D content, a size of the display screen, or a surrounding environment.

8. The method as claimed in any one of the preceding claims, wherein automatically changing the depth includes changing a maximum depth limit or a minimum depth limit.

9. The method as claimed in any one of the preceding claims, wherein automatically changing the depth is based on a reproduction time of the 3D content.

10. The method as claimed in any one of the preceding claims, wherein the automatically (S23) changing a depth of the displayed 3D content includes:
automatically changing a maximum depth limit or a minimum depth limit based on the determined distance and the received information regarding the recognized face shape; and
automatically changing a perceived depth of the displayed 3D image based on the changed maximum depth limit or the changed minimum depth limit.

11. A mobile terminal (100), comprising:
a display (151) to display a perceived 3-dimensional (3D) content on a screen;
a sensing unit (140) to recognize a shape that faces the displayed 3D content; and
a controller (180) to obtain information about the recognized shape, to determine a distance from the mobile terminal to the shape and to automatically change a depth of the displayed 3D based on the determined distance from the mobile terminal to the shape and the obtained information about the recognized shape.

12. The mobile terminal of claim 11, wherein the sensing unit (140) comprises a camera sensor, an infrared sensor, an ultrasonic sensor, or a laser sensor.

13. The mobile terminal of claim 11 or 12, wherein the controller (180) changes the depth of the 3D content based on as nearest shape when a plurality of shapes are recognized.

14. The mobile terminal as claimed in any one of the claims 11-13, wherein the controller (180) changes the depth of the 3D content further based on a user, sex, age, race, feeling, or a distance between two eyes.

15. The mobile terminal as claimed in any one of the claims 11-13" wherein the controller (180) changes the depth of the displayed 3D content further based on at least one of an attribute of the 3D content, a size of the display screen, or a surrounding environment.
